# EUROPÄISCHE PATENTANMELDUNG

(11) **EP 2 433 854 A2**
(43) Veröffentlichungstag der Anmeldung: **28.03.2012**
(21) Anmeldenummer: 11179755.1
(22) Anmeldetag: 01.09.2011
(51) Int. Cl.: B62J 9/00

(54) **Transportbehälter zur Postverteilung mittels Zustellvehikel**

(30) Priorität: 24.09.2010 CH 15452010
(71) Anmelder: Ing. Büro M. Kyburz AG, 8427 Freienstein (CH)
(72) Erfinder: Wyss, Mark, 3095 Spiegel bei Bern (CH)
(74) Vertreter: Schneider Feldmann AG Patent- und Markenanwälte

(57) **Zusammenfassung**

Es wird ein auf einem Zustellvehikel befestigbarer Transportbehälter (0) zum Verteilen von Postgut beschrieben, welcher einen Deckel (1) umfasst, der relativ zu einem Behälterladeteil (2) mittels einer Scharniermechanik (3) in eine Schliessposition, mindestens eine Zwischenposition und eine Maximalöffnungsposition bringbar ist. In den Positionen ist der Deckel (1) durch Positioniermittel eingerastet gehalten. Ein mögliches Positioniermittel ist eine Gasdruckfeder (34), welche das einrasten übernimmt, die Bewegung unterstützen und dämpfen kann. Die Scharniermechanik (3) ist am Behälterladeteil (2) und am Deckel (1) entweder direkt oder indirekt mittels einer Mechanikbefestigung (5) befestigt.

## Beschreibung

### Technisches Gebiet

Die vorliegende Erfindung beschreibt einen Transportbehälter, welcher auf einem Zustellvehikel zur Postverteilung befestigbar ist, umfassend einen Behälterladeteil, welcher mit einem Deckel verschliessbar ist, wobei Postgut in einen Laderaum des Behälterladeteils einbringbar ist.

### Stand der Technik

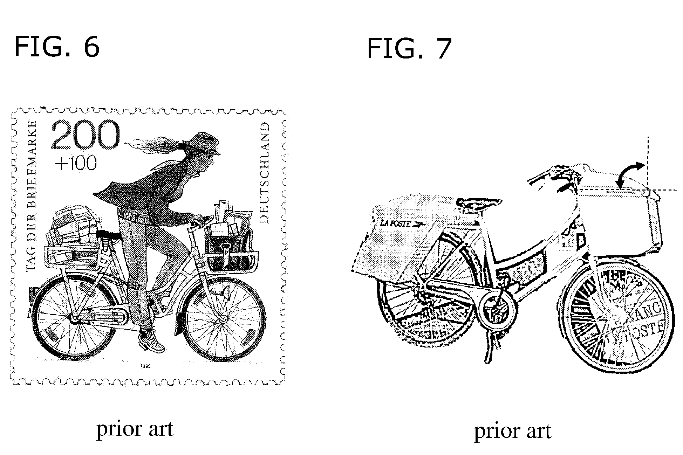

Die Verwendung von Fahrrädern als Zustellvehikel zur Postzustellung ist seit langem bekannt. Postgut in Form von Briefen, Postkarten und Paketen wird in Bündeln oder in Transportbehältern gelagert transportiert, an definierten Routenpunkten entnommen und an die Empfänger verteilt. Wie am Stand der Technik gemäss Figur 6 erkennbar, wurde das Postgut auf Ladeflächen fixiert oder in Transportbehältern beispielsweise in Form von Ledertaschen, welche auf dem Zustellvehikel lösbar befestigt angeordnet wurden. Die flexiblen Transportbehälter sind einfach mit Postgut befüllbar, einfach tragbar und auf dem Zustellvehikel schnell fixierbar. Flexible Transportbehälter haben sich aufgrund mangelnder Stabilität als nachteilig erwiesen. Der Postbote muss den Transportbehälter geöffnet halten, um das Postgut zu suchen und zu entnehmen. Dazu muss der Postbote von dem zweirädrigen Zustellvehikel absteigen und dieses auf einem Ständer sichern.

Wie in Figur 7 deutlich hat sich die Formgebung der Transportbehälter weiterentwickelt. Man ging zu starren Transportbehältern über, welche fest auf dem Rahmen des Fahrrads befestigt wurden. Das Postgut wird in die Transportbehälter gefüllt, welche entweder vom Zustellvehikel abgenommen oder abmontiert werden, oder aber das Postgut wird direkt in den Laderaum der Transportbehälter gefüllt, welche sich auf dem Zustellvehikel befinden. Bei Verwendung von starren Transportbehältern ist das Postgut besser vor Umwelteinflüssen geschützt. Für den Entladevorgang muss der Postbote das zweirädrige Zustellvehikel stoppen, es mit einem Ständer gegen Umfallen sichern und kann dann das Postgut aus den Transportbehältern entnehmen, während er neben dem Zweirad steht. Der Deckel des Transportbehälters wird dazu möglichst weit aufgeklappt, damit ein ungestörter Zugang zum Postgut erreicht wird.

Heute wird dazu übergegangen drei- oder vierrädrige Elektrofahrzeuge als Zustellvehikel einzusetzen. Neben dem Vorteil eines emissionsfreien Betriebs ist auch das Heranfahren, Abbremsen und das Zustellen des Postgutes vorteilhaft. Die Zeit des Heranfahrens des **Zustellvehikels zum Ort des Empfängers kann bereits für** Vorbereitungen der Entnahme genutzt werden.

So muss der Postbote während des Ausrollens des Zustellvehikels keinen Fuss auf den Boden stellen und kann auch im Stillstand bequem sitzen bleiben. Um die Effektivität zu steigern ist es nun unter anderem wünschenswert, bereits im Ausrollen des Zustellvehikels, den Transportbehälter zu öffnen und die zuzustellende Post zu sichten oder bereits zu entnehmen. Dies ist bei Benutzung des oben erwähnten Zweirades mit flexiblem Transportbehälter nicht möglich. Generell scheint dieser Vorgang bei der Verwendung von Zweirädern mit starren Transportbehältern aus Sicherheitsgründen nicht durchführbar zu sein, da der Fahrer Post suchen und entnehmen muss, während er sich mit den Füssen abstützt und das Fahrrad durch Betätigung der Bremsen am Lenker abbremst.

Die Verwendung des Transportbehälters gemäss Figur 7 an der Front eines oben erwähnten drei- oder vierrädrigen Elektrofahrzeugs scheint prinzipiell möglich. Der starre Transportbehälter weist einen Behälterladeteil auf, welcher mit einem Deckel mittels Scharnier verschliessbar ist. Der Fahrer muss aber auch hier den Deckel geöffnet halten, um die Post zu sichten und zu entnehmen. Da sich das Scharnier an dem, dem Lenker abgewandten Ende des Transportbehälters befindet, wird dem Fahrer zusätzlich die Sicht auf die Fahrbahn versperrt, wenn der Deckel aufgeklappt ist und somit ist ein Ausrollen des Zustellvehikels aus Sicherheitsgründen zu vermeiden.

In der DE19630731 ist ein weiterer Transportbehälter für Zustelldienste offenbart, welcher einen, mit einem Deckel vollständig verschliessbaren Behälterladeteil aufweist. Wenn der Deckel aufgeklappt wird, kann das Postgut einfach in den Laderaum des Behälterladeteils eingebracht werden. Beim Zustellen der Post braucht nicht der Deckel hochgeklappt werden, sondern es wird eine im Deckel vorgesehene Klappe betätigt, welche den Laderaum teilweise zugänglich macht. Dadurch kann das Postgut entnommen werden, wobei nicht der gesamte Deckel umständlich und mit Kraftaufwand aufgeklappt werden muss. Der Deckel bzw. die Klappe sind federnd mit Scharnieren am Behälterladeteil befestigt, wobei nur ein vollständiges Öffnen bzw. Verschliessen des Deckels bzw. der Klappe vorgesehen ist. Der Deckel oder die Klappe müssen daher nicht mehr mit einer Hand geöffnet gehalten werden, während die Post gesichtet und entnommen wird. Die Sicht in Richtung Strasse bzw. Fahrbahn ist aber bei Betätigung der Klappe immer noch stark versperrt.

Da der Postbote nicht auf den gesamten Laderaum Zugriff hat, wird er die zu verteilende Post je nach Ort auf der Zustellroute mehrfach so umsortieren müssen, damit die zu verteilende Post durch die Klappe zugänglich ist.

### Darstellung der Erfindung

Die vorliegende Erfindung hat sich zur Aufgabe gestellt einen Transportbehälter zur Postverteilung zu schaffen, welcher auf dem Zustellvehikel befestigbar ist und eine Sichtung des Postgutes und eine Entnahme bereits beim Anfahren an ein Fahrtziel erlaubt, wobei die Sicht auf die Fahrbahn nur wenig bis gar nicht verringert ist, während der Deckel aufgeklappt ist.

Damit ist der Postbote in der Lage bereits beim Ausrollen zum nächsten Fahrtziel den Transportbehälter zu öffnen und die dem Fahrtziel zugeordnete vorsortierte Post zu sichten und/oder zu greifen, wobei zu jeder Zeit ein möglicher Zugriff auf den gesamten Inhalt des Transportbehälters möglich ist.

Eine weitere Aufgabe ist die Erreichung definierter Klapppositionen des Deckels, welche unterstützt erreichbar sind.

Neben verringertem Kraftaufwand zum Auf- und Zuklappen werden Gefahren durch ungewünschtes Zuklappen des Transportbehälters minimiert.

Sollte der Postbote nicht den Zugriff auf den gesamten Inhalt des Transportbehälters benötigen, kann die Öffnung des Deckels in definierten Zwischenpositionen genutzt werden, um möglichst zeitsparend an die zu verteilende Post zu gelangen.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt perspektivische Ansicht eines dreirädrigen Zustellvehikels mit jeweils einem erfindungsgemässen Transportbehälter am Lenker und hinter dem Sitz.
- Figur 2: zeigt eine Explosionsdarstellung eines Transportbehälters mit Bügelgriff.
- Figur 3: zeigt perspektivische Ansichten eines Transportbehälters mit Muldengriff a) in der Schliessposition, b) in einer Arbeitsposition, c) in einer Entnahmeposition und d) in der Maximalöffnungsposition.
- Figur 4a): zeigt einen Vertikalschnitt durch den Transportbehälter in einer Entnahmeposition, während
- Figur 4b): eine perspektivische Ansicht des Transportbehälters gemäss Figur 4a) zeigt.
- Figur 5: **zeigt eine perspektivische Ansicht eines** Transportbehälters in der Maximalöffnungsposition, wobei die Scharniermechanik an den Seitenwänden des Behälterladeteils befestigt ist.
- Figur 6 und 7: zeigen den bekannten Stand der Technik.

### Beschreibung

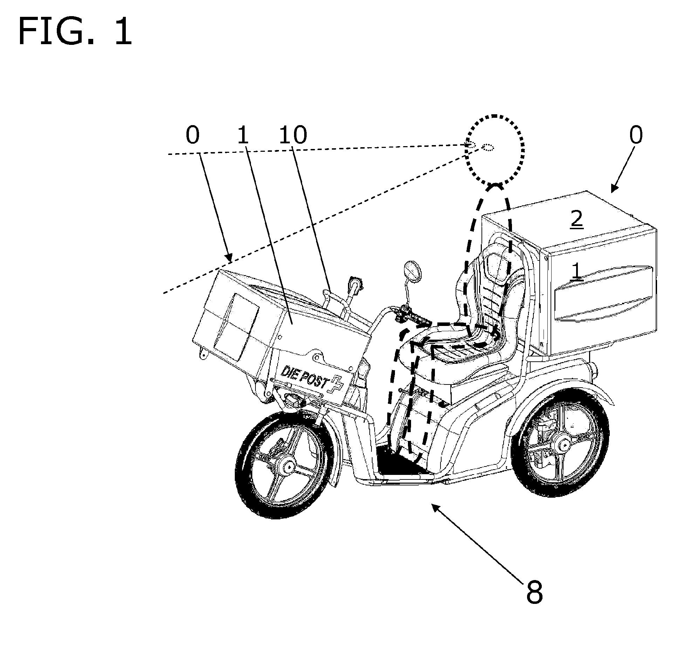

Der hier beschriebene Transportbehälter 0 ist im Frontbereich oder Heckbereich eines Zustellvehikels 8 lösbar oder unlösbar befestigbar. Das hier in Figur 1 dargestellte Zustellvehikel 8 ist ein dreirädriges Elektrofahrzeug. Der Einsatz des Transportbehälters 0 ist aber ebenfalls für vierrädrige Elektrofahrzeuge vorteilhaft.

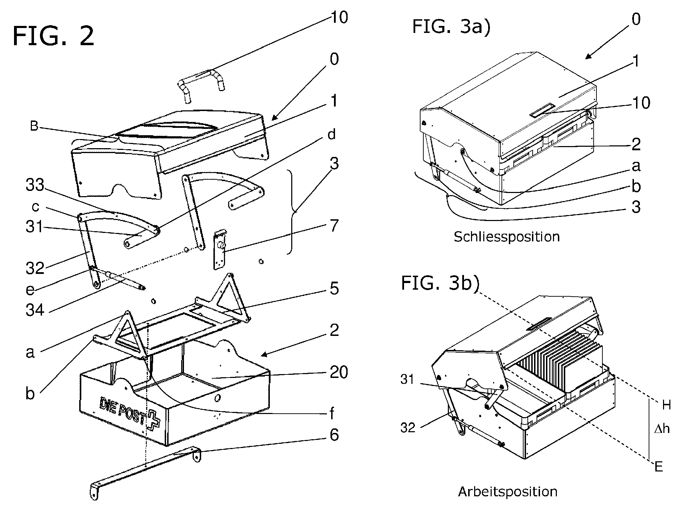

Der Transportbehälter 0 umfasst einen Deckel 1, welcher einen Behälterladeteil 2 mindestens teilweise verschliesst, wobei der Behälterladeteil 2 das zu verteilende Postgut 40 (Figur 3b) aufnimmt. Der Transportbehälter 0 dient einerseits als Wetterschutz des Postguts 40 und weist Feuchtigkeit und Schmutz ab. Andererseits lagert das Postgut 40 im geschlossenen Transportbehälter 0, wie gesetzlich in vielen Ländern gefordert, vor dem Einblick Dritter geschützt, sodass das Postgeheimnis gewahrt bleibt.

In der Explosionszeichnung gemäss Figur 2 ist ein Transportbehälter 0 mit Deckel 1 der Breite B, welcher einen Griff 10 in Form eines Bügelgriffs 10 aufweist, dargestellt. Mittels einer mehrteiligen Scharniermechanik 3 ist der Deckel 1 derart bewegbar auf dem Behälterladeteil 2 gelagert, dass die Sicht auf die Fahrbahn bei Stellung des Deckels 1 in einer von der Schliessposition abweichenden Zwischenposition nur unwesentlich behindert ist.

In der hier gezeigten Ausführungsform ist eine Mechanikbefestigung 5 mit dem Behälterladeteil 2 verbunden vorgesehen, an welcher die Scharniermechanik 3 bewegbar gehalten ist. Befestigungsmittel 6 sind mit dem Boden des Behälterladeteils 2 zur Verbindung des Transportbehälters 0 mit dem Zustellvehikel 8 verbunden. Wie in Figur 2 gezeigt, können die Befestigungsmittel 6 in Form eines Trägers 6 am Rahmen des Zustellvehikels 8 lösbar oder unlösbar befestigt sein, wodurch der Transportbehälter 8 fixiert ist.

Sowohl die Mechanikbefestigung 5 als auch die Befestigungsmittel 6 können aber auch Teil eines starr ausgeführten Behälterladeteils 2 sein. Um den Behälterladeteil 2 geschlossen zu halten und vor dem Zugriff von Dritten zu schützen sind Verschlussmittel 7 vorgesehen, welche eine Sicherung des Deckels 1 in Schliessposition erlauben. Diese Verschlussmittel 7 können im einfachsten Fall per Fusshebel entriegelt werden.

Zur Erreichung der kontrollierten Bewegung des Deckels 1 des Transportbehälters 0 in eine Mehrzahl von gehaltenen Positionen, wobei die Sicht auf die Fahrbahn vom Sitz des Fahrers nahezu unverändert bleibt, dient die Scharniermechanik 3. Die Scharniermechanik 3 umfasst einen ersten Hebel 31, dessen eines Ende an einem ersten Aufhängepunkt a schwenkbar befestigt ist. Das andere Ende des ersten Hebels 31 ist entweder direkt an dem Behälterladeteil 2, oder wie in Figur 2 dargestellt an einem Führungshebel 33 schwenkbar befestigt.

Ein zweiter Hebel 32 ist mit einem Ende an einem zweiten Aufhängepunkt b schwenkbewegbar befestigt. Auch hier ist das andere Ende des zweiten Hebels 32 entweder direkt an dem Behälterladeteil 2, oder wie in Figur 2 dargestellt an einem zweiten Ende des Führungshebels 33 schwenkbar befestigt.

Der Führungshebel 33 ist zwischen zwei Aufhängepunkten c und d gelagert, wobei die Schwenkachsen durch die Aufhängepunkte c und d verlaufen. Die Anordnung eines Führungshebels 33 ist dann nötig, wenn der Deckel 1 flexibel ausgestaltet ist und entsprechend keine stabile schwenkbare Befestigung des ersten Hebels 31 und des zweiten Hebels 32 direkt am Deckel 1 möglich ist.

In dem gezeigten Ausführungsbeispiel sind die Aufhängepunkte a, b an der Mechanikbefestigung 5 vorgesehen, was zwingend nötig ist, wenn der Behälterladeteil 2 flexibel gestaltet ist. Durch die Bewegung des Deckels 1 ist eine gleichzeitige gekoppelte Verschwenkung des ersten und zweiten Hebels 31, 32 möglich.

Um den Deckel 1 in mindestens eine Zwischenposition zwischen einer Schliessposition und einer Maximalöffnungsposition zu halten, in welchen der Deckel 1 einrastet, werden Positioniermittel eingesetzt. Als Positioniermittel ist gemäss Figur 2 eine Gasdruckfeder 34 gewählt, welche in definierten Rastpunkten einrastbar ist. Die Gasdruckfeder 34 ist zwischen einem Aufhängepunkt e am zweiten Hebel 32 und einem Aufhängepunkt f an der Mechanikbefestigung 5 bzw. einer Seitenwand des Behälterladeteils 2 befestigt. Derartige Gasdruckfedern 34 sind kommerziell erhältlich und können ausserdem zur Dämpfung der Bewegung eingesetzt werden. Auch kann ein automatisches Öffnen bis zu einer definierten Position eingestellt werden.

Alternativ können Nocken als Positioniermittel gewählt werden, welche mindestens an den Hebeln 31, 32, 33 und/oder der Mechanikbefestigung 5 und/oder an den Wänden des Deckels 1 bzw. des Behälterladeteils 2 angeordnet sind, wodurch die Bewegung des Deckels 1 an definierten Positionen einrastend gestoppt werden kann. Es können auch Tellerfedern als Positioniermittel fungieren, welche in den Aufhängepunkten a, b des ersten Hebels 31 und/oder des zweiten Hebels 32 angeordnete sind. Durch die Reibung dieser Tellerfedern kann die Bewegung in definierten Positionen einrasten.

Der Transportbehälter 0 bzw. der Deckel 1 kann wie in Figur 3a) gezeigt in eine Schliessposition gebracht werden, in welcher der Deckel 1 den Behälterladeteil 2 verschliesst. Die Verschlussmittel 7 greifen in dieser Schliessposition, sodass ohne Betätigung der Verschlussmittel 7 der Deckel 1 nicht bewegbar ist.

Durch das Verschwenken des Deckels 1 in eine Arbeitsposition (Fig. 3b)) kann der Postbote das Postgut 40 bereits sichten, ohne dass Dritte Einblick in den Transportbehälter 0 erhalten. Der Postbote kann damit beispielsweise kurz schauen, welchen Routenpunkt er als nächstes ansteuern muss. Da die Arbeitsposition gerastet gehalten wird, ist die Sichtung stressfrei und ohne das zusätzliche Halten des Deckels 1 möglich. Auch die Fortbewegung des Zustellvehikels ist bei Stellung des Deckels 1 in Arbeitsposition möglich. Obwohl der Deckel 1 in dieser Position vertikal nach oben aufgeschwenkt ist, ist eine notwendige Sicht gewährleistet.

Wird der Deckel 1 in eine Zwischenposition, hier in die Arbeitsposition gebracht, wird der Deckel 1 durch die Scharniermechanik 3 von einer Ebene E abgehoben. Der von der Ebene E in vertikaler Richtung am weitesten entfernt gelegene Punkt des Deckels 1 liegt bei der vollen Verschwenkung maximal in einer Ebene H. Damit reicht der Deckel 1 maximal um eine Höhe Δh von der Ebene E vertikal nach oben, wobei die Sicht des Postboten auf die Fahrbahn eingeschränkt aber noch ausreichend ist.

Durch Verwendung der speziellen Scharniermechanik 3 mit Doppelhebel wird das Aufschwenken des Deckels 1 in vertikaler Richtung gering gehalten, da der Deckel 1 nicht um eine starre Schwenkachse verschwenkt wird. Damit bleibt Ah immer kleiner als die Breite B des Deckels 1.

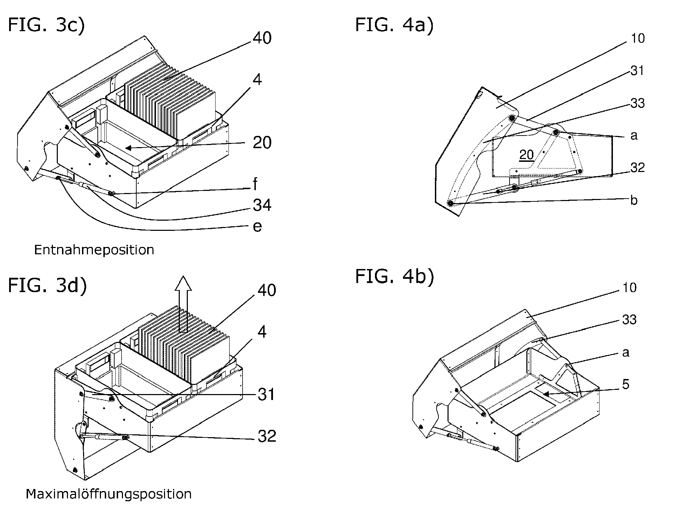

Durch das weitere Verschwenken des Deckels 1, hier durch die Betätigung eines Muldengriffes 10, in eine Entnahmeposition (Fig. 3c)) wird der Laderaum 20 des Behälterladeteils 2 erweitert zugänglich. Beim Verschwenken erfolgt wiederum ein Einrasten der Scharniermechanik 3 in die Entnahmeposition. Die verwendete Gasdruckfeder 34 ist derart gewählt, dass die Einrastung der Scharniermechanik 3 erfolgt und ausserdem eine Unterstützung der Deckelbewegung erreicht wird, wodurch der Kraftaufwand verringert wird.

Das vorsortierte Postgut 40 ist hier in Sortierbehältern 4 angeordnet, wobei die Sortierbehälter 4 lösbar im Laderaum 20 des Behälterladeteils 2 lagerbar sind. Der Postbote hat damit die Möglichkeit die Post in der Poststelle zu sortieren und dann in die Sortierbehälter 4 einzubringen, bevor die Sortierbehälter 4 in den Behälterladeteil 2 eingebracht werden können.

Um die Sortierbehälter 4 zu wechseln und uneingeschränkten Zugang zum Laderaum 20 zu haben, ist eine Maximalöffnungsposition vorgesehen, wie in Figur 3d) dargestellt. Der erste und zweite Hebel 31, 32 sind maximal verschwenkt und in dieser Position eingerastet. Diese Rastung kann mittels Positioniermitteln erreicht werden, wobei im einfachsten Fall die teilweise verkürzte Seitenwand des Deckels 1 an einer Seitenwand des Behälterladeteils 2 anliegt. Durch die verwendete **Scharniermechanik 3 ist auch in dieser** Maximalöffnungsposition des Deckels eine uneingeschränkte Sicht auf die Fahrbahn gewährleistet. Das Postgut 40 bzw. die Sortierbehälter 4 können einfach gewechselt oder befüllt werden. Befindet sich der Deckel 1 in der Maximalöffnungsposition, ist die Sicht auf die Fahrbahn eines sitzenden Fahrers besser als in der Schliessposition.

**Wie in** **Figur 4a****) und b) erkennbar, überstreicht die dem** Behälterladeteil 2 zugewandte Seite des Führungshebels 33 bei der Bewegung die Kante des Behälterladeteils 2. Der erste Hebel 31 und zweite Hebel 32 werden entsprechend um die Aufhängungspunkte a, b mit verschwenkt. Damit ist eine minimale Höhendifferenz Δh **erreichbar, wobei möglichst geringe Kräfte an den** Aufhängungspunkten a, b angreifen und der Deckel 1 geführt wird.

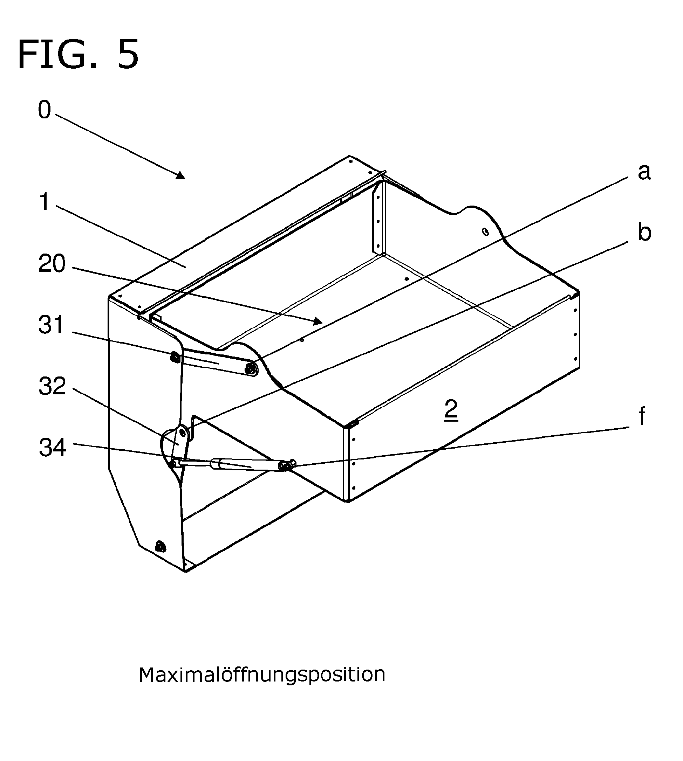

Der Transportbehälter 0 gemäss Figur 5 zeigt einen Deckel 1 in Maximalöffnungsposition. In dieser Ausführungsform ist ein starrer Behälterladeteil 2 vorgesehen, sodass die Seitenwände die Funktion der Mechanikbefestigung 5 übernehmen. Der erste und zweite Hebel 31, 32 sind direkt in den Seitenwänden des Behälterladeteils 2 schwenkbar gelagert. Die Aufhängepunkte a, b und e sind direkt an dem Behälterladeteil 2 vorgesehen, womit die Mechanikbefestigung 5 in den Behälterladeteil 2 integriert ist und kein gesondertes Bauteil ist.

Aufgrund der starren Ausführung ist der Boden des Behälterladeteils 2 direkt auf dem Zustellvehikel 8 befestigbar. Auch der Deckel 1 kann starr ausgestaltet sein, sodass auf einen Führungshebel 33 verzichtet werden kann und erster und zweiter Hebel 31, 32 direkt im Deckel 1 verschwenkbar befestigt werden können.

Die hier beispielsweise in Figur 3a) gezeigte Ausführungsform des Transportbehälters 0 weist einen Deckel 1 auf, dessen dem Postboten zugewandte Seitenwand in Schliessposition nicht bis zur Seitenwand des Behälterladeteils 2 reicht. Damit bleibt der Behälterladeteil 2 teilweise geöffnet, wobei aber kein Postgut herausfallen oder von Dritten unerlaubt entnommen werden kann. Um den Deckel 1 in einem möglichst noch geringeren Abstand und damit mit geringem Höhenunterschied Δh über den Behälterladeteil 2 zu schwenken, ist diese Ausgestaltung sinnvoll.

Der Deckel 1 sowie der Behälterladeteil 2 können wahlweise starr oder flexibel ausgestaltet sein. Das Tiefziehen von Metallen und Kunststoffen zur Erstellung der Bauteile, sowie die Verwendung von mit Kunststoff beschichteten Textilien als Material für den Deckel 1 und/oder den Behälterladeteil 2 sind möglich. In jedem Fall sollte das verwendete Material feuchtigkeits- und schmutzabweisend sein.

Um zu verhindern, dass Dritte unerlaubt Zugriff auf das Postgut 40 innerhalb des Laderaumes 20 erlangen, sind Verschlussmittel 7 vorgesehen, welche das Öffnen des Deckels 1 verhindern. Neben einem Verschlussmittel 7 in Form eines klassischen Schlosses, welches mit einem Schlüssel öffenbar ist, sind elektronische Verschlussmittel 7 einsetzbar. Das Verschlussmittel 7 liegt dann beispielsweise als Infrarotempfänger vor, welcher mittels Fernbedienung ansteuerbar ist, sodass der Postbote durch Knopfdruck den Deckel 1 des Transportbehälters 0 verschliessen und öffnen kann.

Auch kommerziell erhältlichen elektronischen Verschlussmittel 7, welche den Aufenthalt eines Chips oder Senders in einem gewissen Abstand vom Verschlussmittel 7 registrieren können, sind verwendbar. Sender oder Empfänger können wahlweise am Deckel 1 oder Behälterladeteil 2 befestigt sein, oder vom Postboten mitgeführt werden. Dabei kann neben Infrarottechnik auch eine andere drahtlose Signalübertragung genutzt werden, beispielsweise Ultraschall- oder bluetooth-**Technik, sowie andere bekannte drahtlose** Übertragungsarten. Der Postbote kann sich so eine ständige Endriegelung per Knopfdruck sparen.

Neben einem Schutz für Umwelteinflüssen erlaubt der Transportbehälter 0 eine einfache und ergonomische Bedienung, wobei **während der Benutzung ein Sichtschutz zur Wahrung des** Postgeheimnisses besteht. Durch die Abschliessbarkeit wird der Inhalt vor dem Zugriff unberechtigter Dritter gesichert.

In weiteren Ausführungsformen des vorliegenden Transportbehälters 0 können elektromechanische Betätigungsvorrichtungen eingesetzt werden, mittels welchen die Scharniermechanik 3 betätigt wird. Dadurch wird eine Unterstützung bei der Betätigung der Scharniermechanik 3 erreicht und der Postbote benötigt weniger Kraft zum Öffnen und Schliessen. Diese elektromechanische Betätigungsvorrichtung kann zusätzlich noch mit dem Zustellvehikel 8 gekoppelt sein, sodass die Betätigung der Scharniermechanik 3 nur möglich ist, wenn das Zustellvehikel steht oder sich das Zustellvehikel 8 an einer definierten Position befindet. Wenn das Zustellvehikel 8 mit einem GPS-Gerät ausgerüstet ist, kann die elektromechanische Betätigungsvorrichtung derart programmiert sein, dass der Deckel 1 an definierten Positionen, definiert aus Längen- und Breitengrad bestimmt durch das GPS-Gerät betätigbar ist.

### Bezugszeichenliste

- 0: Transportbehälter
- 1: Deckel 10 Griff (Bügel- oder Muldengriff) B Breite des Deckels
- 2: Behälterladeteil 20 Laderaum
- 3: Scharniermechanik 31 erster Hebel 32 zweiter Hebel 33 Führungshebel 34 Gasdruckfeder
- 4: Sortierbehälter (lösbar befestigt) 40 Postgut
- 5: Mechanikbefestigung
- 6: Befestigungsmittel
- 7: Verschlussmittel
- 8: Zustellvehikel
- a, b, c, d: Aufhängepunkte
- e, f: Gasdruckfederaufhängepunkte

## Patentansprüche

1. Transportbehälter (0), welcher auf einem Zustellvehikel (8) zur Postverteilung befestigbar ist, umfassend einen Behälterladeteil (2), welcher mit einem Deckel (1) verschliessbar ist, wobei Postgut (40) in einen Laderaum (20) des Behälterladeteils (2) einbringbar ist,
**dadurch gekennzeichnet, dass**
der Deckel (1) mittels einer Scharniermechanik (3) von einer Schliessposition, über mindestens eine Zwischenposition, insbesondere eine Arbeitsposition und mindestens eine Entnahmeposition, in eine Maximalöffnungsposition gesichert bringbar ist, wobei die verschiedenen Positionen des Deckels (1) durch vorgesehene Positioniermittel gerastet gehalten sind.

2. Transportbehälter (0) gemäss Anspruch 1, **dadurch gekennzeichnet, dass**
die Scharniermechanik (3) einen ersten Hebel (31) und einen zweiten Hebel (32) aufweist, welche gekoppelt zeitgleich auslenkbar sind, sodass die maximale Auslenkung des Deckels (1) vertikal über den Behälterladeteil (2) kleiner als die Breite (B) des Deckels (1) ist.

3. Transportbehälter (0) gemäss Anspruch 1, **dadurch gekennzeichnet, dass**
die Scharniermechanik (3) an einer Mechanikbefestigung (5) und/oder an den Seitenflächen des Behälterladeteils (2) befestigt ist.

4. Transportbehälter (0) gemäss Anspruch 2 und 3, **dadurch gekennzeichnet, dass** die Positioniermittel mindestens eine Gasdruckfeder (34) mit Rastfunktion umfassen, welche am zweiten Hebel (32) und an der Mechanikbefestigung (5) und/oder an dem Behälterladeteil (2) befestigt ist.

5. Transportbehälter (0) gemäss Anspruch 2, **dadurch gekennzeichnet, dass** der erste Hebel (31) und der zweite Hebel (32) über einen Führungshebel (33) miteinander verbunden sind.

6. Transportbehälter (0) gemäss Anspruch 2 und 3, **dadurch gekennzeichnet, dass** die Positioniermittel an der Scharniermechanik (3), an einer Seitenwand des Behälterladeteils (2) und/oder an der Mechanikbefestigung (5) befestigte Nocken sind.

7. Transportbehälter (0) gemäss Anspruch 2 und 3, **dadurch gekennzeichnet, dass** die Positioniermittel an Aufhängepunkten (a, b) des ersten Hebels (31) und/oder des zweiten Hebels (32) angeordnete Tellerfedern sind.

8. Transportbehälter (0) nach einem der vorhergehenden Ansprüche, **dadurch gekennzeichnet, dass** Verschlussmittel (7) am Deckel (1) und/oder dem Behälterladeteil (2) vorgesehen sind, welche ein definiertes Öffnen des Deckels (1) erlauben und etwa das Öffnen durch Unberechtigte verhindern.

9. Transportbehälter (0) gemäss Anspruch 8, **dadurch gekennzeichnet, dass** die Verschlussmittel (7) in Form eines klassischen Schlosses, welches mit einem Schlüssel öffenbar ist, gewählt sind.

10. Transportbehälter (0) gemäss Anspruch 8, **dadurch**
**gekennzeichnet, dass** die Verschlussmittel (7) am Deckel (1) oder am Behälterladeteil (2) in Form elektronischer Verschlussmittel (7) ausgeführt sind.

11. Transportbehälter (0) gemäss Anspruch 10, **dadurch**
**gekennzeichnet, dass** die Verschlussmittel (7) mittels drahtloser Signalübertragung, beispielsweise in Form von Infrarot-, Ultraschall-, bluetooth- oder anderen bekannten elektromagnetischen Signalen steuerbar sind.

12. Transportbehälter (0) gemäss Anspruch 10, **dadurch**
**gekennzeichnet, dass** die Verschlussmittel (7) einen Sender oder einen Empfänger am Deckel (1) oder am Behälterladeteil (2) bilden, sodass der Deckel (1) automatisch öffenbar ist, sobald sich ein Sender oder Empfänger in einem definierten Abstand zum Transportbehälter (0) befindet.

13. Transportbehälter (0) gemäss Anspruch 1, **dadurch**
**gekennzeichnet, dass** die Scharniermechanik (3) durch eine elektromechanische Betätigungsvorrichtung betätigbar ist, sodass der Deckel (1) durch die elektromechanische Betätigungsvorrichtung unterstütz geöffnet und geschlossen wird.

14. Transportbehälter (0) gemäss Anspruch 13, **dadurch gekennzeichnet, dass** der Deckel (1) mittels elektromechanischer Betätigungsvorrichtung gekoppelt an die Position oder den Stillstand des Zustellvehikels (8) öffenbar und schliessbar ist.
